# EUROPÄISCHE PATENTSCHRIFT

(11) **EP 1 241 135 B1**
(45) Veröffentlichungstag und Bekanntmachung des Hinweises auf die Patenterteilung: **11.07.2012**
(21) Anmeldenummer: 01123611.4
(22) Anmeldetag: 02.10.2001
(51) Int. Cl.: C01B 33/193, A61K 9/14, C08K 3/36, B01J 21/08, B01J 35/10, B01J 2/30, A23K 1/175

(54) **Fällungskieselsäuren mit hoher Struktur**
High structure precipitated silica
Silice de précipitation à haute structure

(30) Priorität: 25.11.2000 DE 10058616
(43) Veröffentlichungstag der Anmeldung: 18.09.2002
(73) Patentinhaber: Evonik Degussa GmbH, 45128 Essen (DE)
(72) Erfinder: Kuhlmann, Robert, 50374 Erftstadt (DE); Meier, Karl, 53347 Alfter (DE)

(56) Entgegenhaltungen:
- EP-A- 0 078 909
- EP-A- 0 745 558
- EP-A- 0 901 986
- US-A- 3 480 390

## Beschreibung

Die Erfindung betrifft Fällungskieselsäure mit hoher Struktur, Verfahren zu deren Herstellung und die Verwendung dieser Kieselsäuren.

Unter Struktur einer Kieselsäure ist das Ausmaß der Zusammenlagerung ihrer Primärteilchen zu Sekundärteilchen bzw. zu Tertiäraggregaten zu verstehen. Als Maß für die Struktur wird die Methode der Brabender Dibutylphthalat (DBP)-Absorptinszahl herangezogen.

Sprühgetrocknete Fällungskieselsäuren sind bekannt und z. B. unter dem Namen Sipernat® im Handel. Die Kieselsäuren werden in üblicher Weise durch Fällung von Wasserglas mit Schwefelsäure hergestellt, wobei die gesamte Breite der möglichen Fällungsvarianten zum Einsatz kommen kann, wie z. B. in EP 00 78 909, US 409 47 71 oder US 601 32 34 beschrieben.

In Anschluss an die Fällung wird der Feststoff abfiltriert und der Filterkuchen - ggf. unter Säurezusatz redispergiert - und anschließend sprühgetrocknet. Die Sprühtrocknung ermöglicht die Herstellung von nahezu kugelförmigen, festen Partikeln mit einer engen Größenverteilung.

Aus EP 0 078 909 sind Kieselsäuren mit DBP- Aufnahmen bis 380 g/100g bekannt. Nach Beispiel 1 dieser Patentanmeldung wird eine Kieselsäure mit 380 g/100g DBP- Aufnahme erhalten, indem eine 11 Gew.-% Feststoffe enthaltene Kieselsäuresuspension sprühgetrocknet wird. Nach Beispiel 5 dieser Anmeldung wird beim Versprühen einer 16 Gew.-% enthaltenden Kieselsäuresuspension eine DBP- Aufnahme von 346 g/100 g erhalten.

Ein ähnliches Verfahren wird in US 601 32 34 offenbart. Hier wird eine Kieselsäurensuspension mit einem pH > 4 und einem Feststoffanteil über 18 Gew.-% zu Partikeln mit einem mittleren Teilchendurchmesser über 150 µm und einer BET-Oberfläche von 100 bis 350 m²/g sprühgetrocknet.

Die bekannten sprühgetrockneten Fällungskieselsäuren sind hinsichtlich der DBP-Aufnahme verbesserungsfähig.

Wir haben nun überraschenderweise gefunden, dass hochstrukturierte sprühgetrocknete Kieselsäuren mit DBP-Aufnahmen über 380 g/100 g durch eine bestimmte Fällungsmethode erhalten werden können.

Gegenstand der Erfindung sind Fällungskieselsäuren, die durch folgende physikalischchemische Stoffdaten gekennzeichnet sind:

| | | |
|---|---|---|
| pH-Wert (5%ig in Wasser) (ISO 787-9) | | 3 - 8 |
| BET-Oberfläche (DIN 66131) | m²/g | 400 - 600 |
| DBP-Absorption (DIN 53601, | g/100 g | 380 - 420 |
| bezogen auf getrocknete Substanz) | | |
| Stampfdichte (ISO 787-11) | g/l | 100 - 200 |
| ALPINE-Siebrückstand > 63µ (ISO 8130-1) | % | 0,1-18 |

Fällungskieselsäuren mit diesen Stoffdaten werden im Folgenden als Variante I bezeichnet.

In besonderen Ausführungsformen der vorliegenden Erfindung weisen die Fällungskieselsäuren die folgenden physikalisch-chemischen Stoffdaten auf:

| Variante | | II | III | IV |
|---|---|---|---|---|
| pH-Wert (5%ig in Wasser) (ISO 787-9) | | 3 - 8 | 3 - 8 | 3 - 8 |
| BET-Oberfläche (DIN 66131) | m²/g | 400 - 600 | 400 - 600 | 400 - 600 |
| DBP-Absorption (DIN 53601, | g/100 g | 380 - 420 | 380 - 420 | 380 - 420 |
| bezogen auf getrocknete Substanz) | | | | |
| Stampfdichte (ISO 787-11) | g/l | 140 - 200 | 120-180 | 100 -130 |
| ALPINE-Siebrückstand > 63µm | % | 10 -18 | 1-10 | 0,1-1 |
| (ISO 8130- 1) | | | | |

Weitere Gegenstände der vorliegenden Erfindung sind Verfahren zur Herstellung von Fällungskieselsäuren mit den folgenden physikalisch-chemischen Stoffdaten:

| Variante | | I | II | III | IV |
|---|---|---|---|---|---|
| pH-Wert (5%ig in Wasser) (ISO 787-9) | | 3 - 8 | 3 - 8 | 3 - 8 | 3 - 8 |
| BET-Oberfläche (DIN 66131) | m²/g | 400 - 600 | 400 - 600 | 400 - 600 | 400- 600 |
| DBP-Absorption (DIN 53601, | g/100 g | 380 - 420 | 380 - 420 | 380 - 420 | 380 - 420 |
| bezogen auf getrocknete Substanz) | | | | | |
| Stampfdichte (ISO 787-11) | g/l | 100 - 200 | 140 - 200 | 120 - 180 | 100 -130 |
| ALPINE-Siebrückstand > 63µ | % | 0,1 -18 | 10 18 | 1 -10 | 0,1-1 |
| (ISO 8130-1) | | | | | |

welche dadurch gekennzeichnet sind, dass man unter Rühren und Scheren in eine auf 35 - 45 °C erwärmte Vorlage aus Wasser
a) innerhalb von mindestens 100 Minuten gleichzeitig Wasser und Schwefelsäure unter Aufrechterhaltung von pH 6-7 gibt, wobei die Zugabe für 60 - 120 Minuten unterbrochen wird und sich nach beendeter Zugabe eine Feststoffkonzentration von 36 - 42 g/l einstellt
b) den Feststoff abfiltriert und den Filterkuchen auswäscht und
c) den Feststoff einer Kurzzeit-Trocknung unterwirft, wobei der Filterkuchen auf einen Feststoffgehalt von weniger als 18 Gew.-% verflüssigt und diese Suspension sprühgetrocknet wird oder dass der Filterkuchen mittels eines Spin-Flash-Trockners getrocknet wird.

Eine besondere Variante des Verfahrens ist dadurch gekennzeichnet, dass man unter Rühren in eine auf 35 - 45, bevorzugt 36 - 40 °C erwärmte Vorlage aus Wasser unter Aufrechterhaltung von pH 6 - 7 durch gleichzeitigen Zulauf von Wasserglas und Schwefelsäure, unter Scheren mittels eines zusätzlich zum Rührer installierten Scheibenrührers während der gesamten Fällzeit, durch 90 minütige Unterbrechung der Fällung von der 13. bis zur 103. Minute nach einer Gesamtfälldauer von 137 Minuten eine Kieselsäureendkonzentration in der Fällungssuspension zwischen 38 und 42 g/l einstellt, die Fällungssuspension filtriert, auswäscht, den Filterkuchen trocknet oder unter Zusatz von Wasser und/oder Säure zu einer Suspension mit 8 - 16 % Feststoff verflüssigt, und sprühtrocknet.

Der pH-Wert des Endprodukts ist für viele Verwendungen der Kieselsäure von entscheidender Bedeutung. So ist für die Verwendung als Trägermaterial für Vitamine ein neutraler bis schwach saurer pH des Endprodukts erforderlich. Die Veränderung des pH-Werts kann entweder durch nachträgliche Behandlung der sprühgetrockneten Kieselsäure mit Basen wie Ammoniakgas oder entsprechende pH-Wert-Einstellung des resuspendierten Filterkuchens erfolgen.

Die Bestimmung des pH-Werts der Kieselsäure wird an einer 5 Gew.-% Suspension von sprühgetrockneter Kieselsäure gemäß ISO 787-9 durchgeführt.

Das Verfahren der Erfindung kann so ausgeführt werden, dass entweder der pH-Wert der Fällungssuspension nach der Fällung nicht verändert oder aber durch Säurezugabe (z. B. Schwefelsäure) auf pH 2 - 5, bevorzugt ca. 3 abgesenkt wird.

Die Abtrennung des Feststoffs aus der Suspension erfolgt durch bekannte Filteroperationen wie z. B. eine Filterpresse (Membranfilterpresse). Der so erhaltene Filterkuchen kann getrocknet werden, z. B. mittels eines Spin-Flash-Trockners. Es ist auch möglich, den Filterkuchen unter Zusatz von Wasser und/oder Säure zu verflüssigen. Bei Einsatz von Säuren (z. B. verdünnter Schwefelsäure) wird ein pH der Suspension von <5, bevorzugt 2 - 4 eingestellt.

In einer besonderen Ausführungsform des Verfahrens wird das kurzzeitgetrocknete Produkt mit Ammoniakgas nachbehandelt bzw. die Trocknung findet unter Anwesenheit von Ammoniakgas statt.

Die Zugabe von Ammoniakgas erhöht den pH-Wert der Kieselsäure und ermöglicht höhere DBP-Aufnahmen.

Mit Hilfe eines Sprühtrockners oder eines Düsentrockners (Düsenturm) kann eine bestimmte Korngrößenverteilung eingestellt werden. Dies kann durch Auswahl des Trocknertyps (Einstoffdüse, 2-Stoffdüsen, Gas-/Flüssigkeitsdüse, Zerstäuberscheibe) und dem angewandten Sprühdruck eingestellt werden. Typischerweise wird ein Trockner mit einer Zerstäuberscheibe verwendet.

Erfindungsgemäße Kieselsäuren können als Träger zur Überführung von Flüssigkeiten in Pulverform, z. B. in der Pflanzenschutz-, Schädlingsbekämpfungs- oder Futtermittelindustrie (z. B. Vitamine A und E, Cholinchlorid), als free- flow- oder anticaking-Mittel, z. B. für Speisesalz oder Fertiggerichte, sowie in Elastomeren wie Reifen verwendet werden.

Die erfindungsgemäßen Kieselsäuren können zur Herstellung von Katalysatorträgern verwendet werden.

Die folgenden Beispiele sollen die Erfindung näher verdeutlichen, ohne den Schutzbereich einzuschränken.

### Vergleichsbeispiel 1

Die Fällung wurde gemäß EP 0 078 909, Beispiel 1 durchgeführt. Hierzu wird in einem Fällbehälter, der mit einem EKATO MIG-Rührer und einer zusätzlichen EKATO-Scherturbine ausgerüstet ist, 60 m³ Wasser mit einer Temperatur von 40 °C vorgelegt. In diese Vorlage fließen gleichzeitig mit einer Geschwindigkeit von 10,0 m³/h handelsübliches Wasserglas (26,8 % SiO₂; 8,0 % Na₂O; Dichte 1,346) und Schwefelsäure (96%ig) mit einer Geschwindigkeit von 0,9 m³/h. Nach der 13. Fällminute wird die Zugabe von Wasserglas und Säure für 90 Minuten unterbrochen. Während dieser Zeit laufen beide Rührorgane weiter. Ab der 103. Minute wird die Zugabe von Wasserglas und Schwefelsäure unter Einhaltung der oben genannten Zugabegeschwindigkeit bis zur 146. Minute fortgesetzt. Der Feststoffgehalt der Fällungssuspension beträgt 47 g/l.

Die Suspension wird in Filterpressen filtriert, gewaschen und der erhaltene Presessenteig unter Einwirkung von Scherkräften verflüssigt. Der Feststoffgehalt beträgt 11,0 %, der pH-Wert 5. Im Anschluß daran wird die Kieselsäuresuspension sprühgetrocknet. An dem so hergestellten Produkt wurde eine DBP- Aufnahme von 355 g/100 g ermittelt.
Die Kenndaten des unvermahlenen Produktes finden sich in der Tabelle.

### Vergleichsbeispiel 2

Die Herstellung der Fällungskieselsäure wurde gemäß EP 0 078 909, Beispiel 5 durchgeführt und unterscheidet sich gegenüber Vergleichsbeispiel 1 lediglich in der Herstellung der Kieselsäuresuspension für die Sprühtrocknung. Der Pressenteig wird unter Scherung durch Zugabe von Wasser und Schwefelsäure auf einen Feststoffgehalt von 16 Gew.-% und einen pH-Wert von 4,5 gebracht. Die DBP-Aufnahme beträgt 349 g/100 g.
Die Kenndaten des unvermahlenen Produktes finden sich in der Tabelle.

### Beispiel 1

In einen mit einem EKATO MIG-Rührwerk und zusätzlich einem EKATO-Scheibenrührer (350 mm Durchmesser) ausgerüsteten Fällbehälter werden 60 m³ Wasser von 38 °C vorgelegt. In diese Vorlage fließen unter Aufrechterhaltung von pH 6,5 gleichzeitig 10,0 m³/h handelsübliches Wasserglas (27,1 % SiO₂; 8,07 % Na₂O; Dichte 1,355) und 0,9 m³/h Schwefelsäure (96%ig). Die Säure wird hierbei über den Scheibenrührer, der mit Fällungsbeginn mit in Betrieb gesetzt wird, zugeleitet. Nach 13 Minuten Fällzeit wird die Zuführung von Wasserglas und Säure für die Dauer von 90 Minuten unterbrochen. Während dieser Zeit laufen Rührer und EKATO-Scheibenrührer weiter. Danach wird die Zugabe von Wasserglas und Schwefelsäure unter Einhaltung der oben genannten Zugabegeschwindigkeiten und des pH-Wertes weitere 34 Minuten fortgesetzt. Im Anschluß daran wird die Suspension unter weiterer Zuführung von Schwefelsäure bis pH 3 angesäuert. Der Feststoffgehalt in der Fällungssuspension beträgt 40 g/l. Die Suspension wird danach mittels Filterpressen filtriert und gewaschen. Zur Weiterverarbeitung wird der Pressenteig unter Scheren und Zusatz von Wasser und geringer Mengen Schwefelsäure verflüssigt. Der pH-Wert beträgt pH 5,0, der Feststoffgehalt 12,0 %. Im Anschluss daran wird die Kieselsäuresuspension sprühgetrocknet. Zur Neutralisation der freien Schwefelsäure wird das Material hinter dem Sprühtrockner mit Ammoniakgas neutralisiert.
Die Kenndaten des unvermahlenen Produktes finden sich in der Tabelle.

### Beispiel 2

Die Herstellung der Fällungskieselsäure erfolgt gemäß Beispiel 1. Abweichend hiervon wird der nach Aufarbeitung in Membranfilterpressen erhaltene Pressenteig unter Scheren und Zusatz von Wasser un geringen Mengen Schwefelsäure verflüssigt. Der pH-Wert beträgt 5,0, der Feststoffgehalt 11,0 %. Im Anschluss daran wird die Kieselsäuresuspension sprühgetrocknet.

### Beispiel 3

Die Herstellung der Fällungskieselsäure erfolgt gemäß Beispiel 1. Abweichend hiervon wird der durch Waschen in der Filterpresse hergestellte Pressenteig nur unter Zusatz von Wasser verflüssigt. Der Feststoffgehalt beträgt 8 %.
Die Kenndaten des unvermahlenen Produktes finden sich in der Tabelle.

### Beispiel 4

Die Herstellung der Fällungskieselsäure erfolgt gemäß Beispiel 1. Abweichend hiervon wird der, nach Aufarbeitung in Membranfilterpressen erhaltene, Pressenteig mit 18,0 % Feststoff zur Weiterverarbeitung im Spin-Flash-Trockner getrocknet (O. T. KRAGH, Keramische Zeitschrift, Bd. 30 Heft 7, S. 369 - 370, 1978; T. HOEPFFNER, Informations Chemie, Bd. 342, S. 141 - 145, 1992).
Die Kenndaten des unvermahlenen Produktes finden sich in der Tabelle.

### Beispiel 5

Die Herstellung der Fällungskieselsäure erfolgt gemäß Beispiel 1. Abweichend hiervon wird die Fällungssuspension nach Beendigung der Fällung nicht angesäuert. Die Suspension wird danach in Membranfilterpressen filtriert und mit stark verdünnter Schwefelsäure von Ph 1,6-1,8 gewaschen.Zur Weiterverarbeitung wird der Filterkuchen mit 18,0 % Feststoff im Spin-Flash-Trockner getrocknet. Die durch den Waschvorgang im Feststoff enthaltene freie Schwefelsäure wird durch Ammoniakgas-Zugabe neutralisiert bzw. der pH-Wert im Pulver darüber hinaus noch bis auf 7,7 weiter angehoben.
Die Kenndaten der unvermahlenen Produkte finden sich in der Tabelle.

### Beispiel 6

Die Herstellung der Fällungskieselsäure und die Aufarbeitung der Suspension einschließlich saurem Waschen erfolgt gemäß Beispiel 4. Zur Weiterverarbeitung wird der Filterkuchen unter Scheren und Zusatz von Wasser verflüssigt. Der pH-Wert beträgt 3,2, der Feststoffgehalt 11%. Zur Neutralisation der freien Schwefelsäure wird das Material hinter dem Sprühtrockner mit Ammoniakgas neutralisiert.
Die Kenndaten des unvermahlenen Produktes finden sich in der Tabelle.

**Tabelle**

| | | **Vergleichsbeispiele** | | **Beispiele** | | | | | | | | | |
|---|---|---|---|---|---|---|---|---|---|---|---|---|---|
| | | 1 | 2 | 1 | 2 | 3 | 4 | 5 | | | | | 6 |
| pH-Wert | | 6,4 | 6,2 | 7,6 | 6,7 | 6,7 | 6,4 | 3,1 | 4,7 | 6,3 | 7,0 | 7,7 | 6,3 |
| DBP-Aufnahme | g/100 g | 355 | 349 | 389 | 382 | 400 | 387 | 383 | 391 | 398 | 406 | 412 | 387 |
| Stampfdichte | g/l | 180 | 182 | 154 | 154 | 135 | 120 | 119 | 115 | 111 | 108 | 111 | 164 |
| ALPINE SR > 63 µm | % | 10 | 23 | 15 | 1,4 | 1,8 | 0,3 | 0,2 | 0,3 | 0,3 | 0,2 | 0,1 | 18 |
| BET-Oberfläche | m²/g | 429 | 515 | 454 | 458 | 485 | 484 | 501 | | | | 476 | 495 |
| Suspension | pH | ∼ 6 | | ∼ 3 | | | | ∼ 7 | | | | | |
| Waschvorgang | | normal | | normal | | | | sauer | | | | | |
| Suspension des Pressenteigs | pH | 5 | 4,5 | 5 | 5 | 5 | entfällt | entfällt | (Teig hat pH ∼ 3) | | | | 3,2 |
| Feststoffgehalt | % | 11 1 | 16 | 12 | 11 | 8 | 18 | 18 | | | | | 11 |
| NH₃-Zugabe | - | - | + | - | - | - | - | + | + | + | + | + | + |
| Trockner | SP | SP | SP | SP | SP | SF | SF | SF | SF | SF | SF | SF | SP |

| | | | | | | | | | | | | | |
|---|---|---|---|---|---|---|---|---|---|---|---|---|---|
| * SF = Spinflash-Trockner SP = Sprühtrockner | | | | | | | | | | | | | |

## Patentansprüche

1. Fällungskieselsäure, **gekennzeichnet durch** die folgenden physikalisch-chemischen Kenndaten:
| | | |
|---|---|---|
| pH-Wert (5%ig in Wasser) (ISO 787-9) | | 3 bis 8 |
| BET-Oberfläche (DIN 66133) | m²/g m²/g | 400 bis 600 |
| DBP-Absorption (DIN 53601, bezogen auf getrocknete Substanz) | g/100g | 380 bis 420 |
| Stampfdichte (ISO 787 -11) | g/l | 100 bis 200 |
| ALPINE-Siebrückstand > 63 µm (ISO 8130-1) | % | 0,1 bis 18 |

2. Fällungskieselsäure nach Anspruch 1, **gekennzeichnet durch** die folgenden physikalisch-chemischen Kenndaten:
| | | |
|---|---|---|
| pH-Wert (5%ig in Wasser) (ISO 787-9) | | 3 bis 8 |
| BET-Oberfläche (DIN 66133) | m²/g | 400 bis 600 |
| DBP-Absorption (DIN 53601, bezogen auf getrocknete Substanz) | g/100g | 380 bis 420 |
| Stampfdichte (ISO 787 -11) | g/l | 140 bis 200 |
| ALPINE-Siebrückstand > 63 µm (ISO 8130-1) | % | 10 bis 18 |

3. Fällungskieselsäure nach Anspruch 1, **gekennzeichnet durch** die folgenden physikalisch-chemischen Kenndaten:
| | | |
|---|---|---|
| pH-Wert (5%ig in Wasser) (ISO 787-9) | | 3 bis 8 |
| BET-Oberfläche (DIN 66133) | m²/g | 400 bis 600 |
| DBP-Absorption (DIN 53601, bezogen auf getrocknete Substanz) | g/100g | 380 bis 420 |
| Stampfdichte (ISO 787 -11) | g/l | 140 bis 180 |
| ALPINE-Siebrückstand > 63 µm (ISO 8130-1) | % | 1 bis 10 |

4. Fällungskieselsäure nach Anspruch 1, **gekennzeichnet durch** die folgenden physikalisch-chemischen Kenndaten:
| | | |
|---|---|---|
| pH-Wert (5%ig in Wasser) (ISO 787-9) | | 3 bis 8 |
| BET-Oberfläche (DIN 66133) | m²/g m²/g | 400 bis 600 |
| DBP-Absorption (DIN 53601, bezogen auf getrocknete Substanz) | g/100g | 380 bis 420 |
| Stampfdichte (ISO 787-11) | g/l | 100 bis 130 |
| ALPINE-Siebrückstand > 63 µm (ISO 8130-1) | % | 0,1 bis 1 |

5. Verfahren zur Herstellung einer Fällungskieselsäure gemäß einem der Ansprüche 1 bis 4, **dadurch gekennzeichnet,**
**dass** man unter Rühren und Scheren in eine auf 35- 45 °C erwärmte Vorlage aus Wasser
a) innerhalb von mindestens 100 Minuten gleichzeitig Wasserglas und Schwefelsäure unter Aufrechterhaltung von pH 6-7 gibt, wobei die Zugabe für 60 - 120 Minuten unterbrochen wird und sich nach beendeter Zugabe eine Feststoffkonzentration von 36 - 42 g/l einstellt
b) den Feststoff abfiltriert und den Filterkuchen auswäscht und
c) den Feststoff einer Kurzzeit-Trocknung unterwirft, wobei
Filterkuchen mittels eines Spin-Flash-Trockners getrocknet wird.

6. Verfahren zur Herstellung einer Fällungskieselsäure nach Anspruch 5,
**dadurch gekennzeichnet,**
**dass** die nach der Kuzzeit-Trocknung erhaltene Kieselsäure mit Ammoniakgas auf pH von 7 bis 8 eingestellt wird.

7. Verfahren zur Herstellung einer Fällungskieselsäure nach einem der Ansprüche 5 bis oder 6,
**dadurch gekennzeichnet,**
**dass** man den Filterkuchen mit verdünnter Schwefelsäure auswäscht.

8. Verwendung der Fällungskieselsäure nach einem der Ansprüche 1 bis 4 als Träger für Futtermittel, Vitamine oder Katalysatoren.

9. Verwendung der Fällungskieselsäure nach einem der Ansprüche 1 bis 4 als free-flow oder anticaking-Mittel.

10. Verwendung der Fällungskieselsäure nach einem der Ansprüche 1 bis 4 als Hilfsmittel zur Überführung von Flüssigkeiten in Pulverform.

11. Verwendung der Fällungskieselsäure nach einem der Ansprüche 1 bis 4 in Elastomerenmischungen.

12. Verwendung der Fällungskieselsäure nach einem der Ansprüche 1 bis 4 zur Herstellung von Katalysatorenträgern.

## Claims

1. Precipitated silica **characterized by** the following physicochemical data:
| | | |
|---|---|---|
| pH value (5% in water) (ISO 787-9) | | 3 to 8 |
| BET surface area (DIN 66133) | m²/g | 400 to 600 |
| DBP absorption (DIN 53601, based on dried substance) | g/100 g | 380 to 420 |
| Tapped density (ISO 787-11) | g/l | 100 to 200 |
| ALPINE sieve residue > 63 µm (ISO 8130-1) | % | 0.1 to 18 |

2. Precipitated silica according to Claim 1, **characterized by** the following physicochemical data:
| | | |
|---|---|---|
| pH value (5% in water) (ISO 787-9) | | 3 to 8 |
| BET surface area (DIN 66133) | m²/g | 400 to 600 |
| DBP absorption (DIN 53601, based on dried substance) | g/100 g | 380 to 420 |
| Tapped density (ISO 787-11) | g/l | 140 to 200 |
| ALPINE sieve residue > 63 µm (ISO 8130-1) | % | 10 to 18 |

3. Precipitated silica according to Claim 1, **characterized by** the following physicochemical data:
| | | |
|---|---|---|
| pH value (5% in water) (ISO 787-9) | | 3 to 8 |
| BET surface area (DIN 66133) | m²/g | 400 to 600 |
| DBP absorption (DIN 53601, based on dried substance) | g/100 g | 380 to 420 |
| Tapped density (ISO 787-11) | g/l | 140 to 180 |
| ALPINE sieve residue > 63 µm (ISO 8130-1) | % | 1 to 10 |

4. Precipitated silica according to Claim 1, **characterized by** the following physicochemical data:
| | | |
|---|---|---|
| pH value (5% in water) (ISO 787-9) | | 3 to 8 |
| BET surface area (DIN 66133) | m²/g | 400 to 600 |
| DBP absorption (DIN 53601, based on dried substance) | g/100 g | 380 to 420 |
| Tapped density (ISO 787-11) | g/l | 100 to 130 |
| ALPINE sieve residue > 63 µm (ISO 8130-1) | % | 0.1 to 1 |

5. Process for producing a precipitated silica according to one of Claims 1 to 4, **characterized in that**, in an initial charge of water warmed to 35-45°C, with stirring and shearing,
a) over a period of at least 100 minutes, waterglass and sulfuric acid are added simultaneously, maintaining a pH of 6-7, the addition being interrupted for 60-120 minutes and the system, after the end of the addition, having a solids concentration of 36-42 g/l
b) the solid material is isolated by filtration and the filter cake is washed and
c) the solid material is subjected to short-duration drying, the filter cake being liquefied to a solids content of less than 18% by weight and this suspension being spray-dried or the filter cake being dried by means of a spin-flash dryer.

6. Process for producing a precipitated silica according to Claim 5, **characterized in that** the silica obtained after short-duration drying is adjusted to a pH of from 7 to 8 with ammonia gas.

7. Process for producing a precipitated silica according to either of Claims 5 and 6, **characterized in that** the filter cake is washed with dilute sulfuric acid.

8. Use of the precipitated silica according to one of Claims 1 to 4 as carrier for feed or vitamins or as support for catalysts.

9. Use of the precipitated silica according to one of Claims 1 to 4 as a free-flow or anticaking agent.

10. Use of the precipitated silica according to one of Claims 1 to 4 as an auxiliary for converting liquids into powder form.

11. Use of the precipitated silica according to one of Claims 1 to 4 in elastomer mixtures.

12. Use of the precipitated silica according to one of Claims 1 to 4 for producing catalyst supports.

## Revendications

1. Silice précipitée, **caractérisée par** les données physico-chimiques caractéristiques suivantes :
| | | |
|---|---|---|
| pH (à 5 % dans l'eau) (ISO 787-9) | | 3 à 8 |
| surface BET (DIN 66133) | m²/g | 400 à 600 |
| absorption de DBP (DIN 53601, par rapport à la substance sèche) | g/100 g | 380 à 420 |
| densité apparente (ISO 787-11) | g/l | 100 à 200 |
| résidu de tamis ALPINE > 63 µm (ISO 8130-1) | % | 0,1 à 18. |

2. Silice précipitée selon la revendication 1, **caractérisée par** les données physico-chimiques caractéristiques suivantes :
| | | |
|---|---|---|
| pH (à 5 % dans l'eau) (ISO 787-9) | | 3 à 8 |
| surface BET (DIN 66133) | m²/g | 400 à 600 |
| absorption de DBP (DIN 53601, par rapport à la substance sèche) | g/100 g | 380 à 420 |
| densité apparente (ISO 787-11) | g/l | 140 à 200 |
| résidu de tamis ALPINE > 63 µm (ISO 8130-1) | % | 10 à 18. |

3. Silice précipitée selon la revendication 1, **caractérisée par** les données physico-chimiques caractéristiques suivantes :
| | | |
|---|---|---|
| pH (à 5 % dans l'eau) (ISO 787-9) | | 3 à 8 |
| surface BET (DIN 66133) | m²/g | 400 à 600 |
| absorption de DBP (DIN 53601, par rapport à la substance sèche) | g/100 g | 380 à 420 |
| densité apparente (ISO 787-11) | g/l | 140 à 180 |
| résidu de tamis ALPINE > 63 µm (ISO 8130-1) | % | 1 à 10. |

4. Silice précipitée selon la revendication 1, **caractérisée par** les données physico-chimiques caractéristiques suivantes :
| | | |
|---|---|---|
| pH (à 5 % dans l'eau) (ISO 787-9) | | 3 à 8 |
| surface BET (DIN 66133) | m²/g | 400 à 600 |
| absorption de DBP (DIN 53601, par rapport à la substance sèche) | g/100 g | 380 à 420 |
| densité apparente (ISO 787-11) | g/l | 100 à 130 |
| résidu de tamis ALPINE > 63 µm (ISO 8130-1) | % | 0,1 à 1. |

5. Procédé pour la préparation d'une silice précipitée selon l'une quelconque des revendications 1 à 4, **caractérisé en ce que**
dans une charge préalable d'eau chauffée à 35-45 °C, sous agitation et cisaillement
a) on introduit en l'espace d'au moins 100 minutes simultanément de l'orthosilicate de sodium et de l'acide sulfurique avec maintien de pH 6-7, en interrompant l'addition pendant 60 - 120 minutes et, une fois l'addition terminée, on ajuste une concentration de matière solide de 36 - 42 g/l
b) on sépare par filtration la matière solide et on lave complètement le gâteau de filtration et
c) on soumet la matière solide à un séchage en un temps court,
on fluidifie le gâteau de filtration jusqu'à une teneur en matière solide de moins de 18 % en poids et on lyophilise cette suspension ou
on sèche le gâteau de filtration au moyen d'un sécheur spin-flash.

6. Procédé pour la préparation d'une silice précipitée selon la revendication 5, **caractérisé en ce qu'**on ajuste à pH 7 à 8 à l'aide de gaz ammoniac la silice obtenue après le séchage en un temps court.

7. Procédé pour la préparation d'une silice précipitée selon la revendication 5 ou 6, **caractérisé en ce qu'**on lave complètement le gâteau de filtration avec de l'acide sulfurique dilué.

8. Utilisation de la silice précipitée selon l'une quelconque des revendications 1 à 4, en tant que support pour aliments pour animaux, vitamines ou catalyseurs.

9. Utilisation de la silice précipitée selon l'une quelconque des revendications 1 à 4, en tant qu'agent free-flow ou anti-agglomération.

10. Utilisation de la silice précipitée selon l'une quelconque des revendications 1 à 4, en tant qu'adjuvant dans la conversion de liquides en forme pulvérulente.

11. Utilisation de la silice précipitée selon l'une quelconque des revendications 1 à 4, dans des compositions d'élastomères.

12. Utilisation de la silice précipitée selon l'une quelconque des revendications 1 à 4, pour la production de supports de catalyseurs.
